(19) **Europäisches Patentamt / European Patent Office / Office européen des brevets**

(11) **EP 3 239 108 B1**

(12) **EUROPEAN PATENT SPECIFICATION**

(45) Date of publication and mention of the grant of the patent:
**08.04.2020 Bulletin 2020/15**

(21) Application number: **14909078.9**

(22) Date of filing: **26.12.2014**

(51) Int Cl.:
**C02F 11/10** (2006.01)    **B09B 3/00** (2006.01)
**C02F 11/12** (2019.01)    **F23G 5/00** (2006.01)
**F23G 7/00** (2006.01)

(86) International application number:
**PCT/JP2014/084595**

(87) International publication number:
**WO 2016/103474 (30.06.2016 Gazette 2016/26)**

(54) **METHOD FOR MELTING TREATMENT OF PHOSPHORUS-CONTAINING SUBSTANCE AND MELTING FURNACE OPERATION METHOD**

VERFAHREN ZUR SCHMELZBEHANDLUNG EINER PHOSPHORHALTIGEN SUBSTANZ UND SCHMELZOFENBETRIEBSVERFAHREN

PROCÉDÉ DE TRAITEMENT DE FUSION D'UNE SUBSTANCE CONTENANT DU PHOSPHORE ET PROCÉDÉ DE FONCTIONNEMENT DE FOUR DE FUSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.11.2017 Bulletin 2017/44**

(73) Proprietor: **Kubota Corporation**
**Osaka-shi, Osaka 556-8601 (JP)**

(72) Inventors:
• **SATO, Makoto**
  **Amagasaki-shi**
  **Hyogo 661-8567 (JP)**
• **YOSHIOKA, Youji**
  **Amagasaki-shi**
  **Hyogo 661-8567 (JP)**
• **HOSHO, Fumiki**
  **Amagasaki-shi**
  **Hyogo 661-8567 (JP)**

• **OKADA, Masaharu**
  **Amagasaki-shi**
  **Hyogo 661-8567 (JP)**
• **NOMURA, Naofumi**
  **Amagasaki-shi**
  **Hyogo 661-8567 (JP)**

(74) Representative: **Betten & Resch**
**Patent- und Rechtsanwälte PartGmbB**
**Maximiliansplatz 14**
**80333 München (DE)**

(56) References cited:
JP-A- H06 159 640    JP-A- 2000 140 895
JP-A- 2000 140 895    JP-A- 2001 029 998
JP-A- 2001 029 998    JP-A- 2003 212 615
JP-A- 2003 212 615    JP-A- 2006 015 173
JP-A- 2015 033 691

# Description

[TECHNICAL FIELD]

The present invention relates to a melt treatment method for a phosphorus-containing material and a method for operating a melting furnace in which a phosphorus component is captured in slag while lowering the possibility of volatilization of the phosphorus component into exhaust gas in a melt treatment performed on a phosphorus-containing material such as sewage sludge.

[BACKGROUND ART]

A sludge generated in a sewage-treatment plant is subjected to melt treatment in a melting furnace to be slag, for volume reduction, stabilization, and recycling.

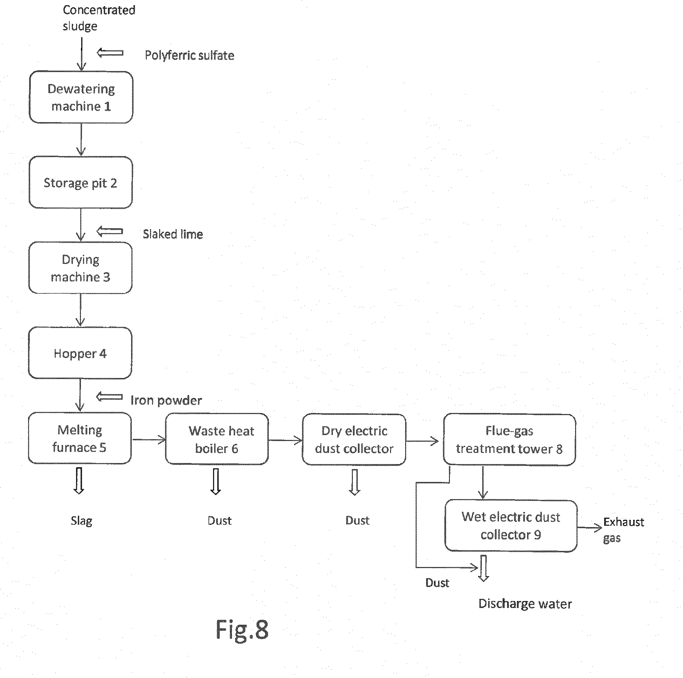

For example, as illustrated in Fig. 8, as a pretreatment step, a polyferric sulfate as an example of a flocculation agent is added to concentrated sludge, and the resultant flocculated concentrated sludge is dewatered in a dewatering machine 1. The resultant dewatered sludge is stored in a storage pit 2. Then, the dewatered sludge is dried in a drying machine 3, and the resultant dried sludge is stored in a hopper 4. Then, the sewage sludge, thus adjusted to have water reduced in the pretreatment step, is subjected to a melting step in which the sludge is put into a melting furnace 5 from the hopper 4 to be molten, and a cooling step in which the sludge molten in the melting step is cooled to be solidified, whereby the slag is obtained.

Exhaust gas discharged from the melting furnace 5 is treated in a waste heat boiler 6, a dry electric dust collector 7, a flue-gas treatment tower 8, and a wet electric dust collector 9. Discharge water from the wet electric dust collector 9 is purified in a water treatment equipment.

Recent sewage treatment includes advanced treatment involving a dephosphorizing process to prevent eutrophication of the exhaust water. This has lead to an increased concentration of a phosphorus component in excess sludge generated in the sewage-treatment plant. When the sewage sludge with such a high concentration of the phosphorus component is molten in the melting furnace, the phosphorus component may volatilize to be attached to a flue together with dust. Such a phosphoric acid compound is highly adherent and corrosive, and thus causes problems such as clogging of the flue and corroding of the exhaust-gas treatment equipment. Thus, various countermeasures have been proposed.

In a technique proposed in Patent document 1, a phosphorus component is captured on a slag side with: an appropriate value of a Fe/P ratio, regarding a correlation between the Fe/P ratio in sewage sludge and a loss of ignition VTS, determined in advance based on experiences; obtaining the Fe/P ratio and VTS by analyzing the sewage sludge as a melting target material; and iron powder added to the sewage sludge, before being put into the melting furnace, in such a manner that Fe/P as an analysis value exceeds the appropriate value based on experiences.

A melt treatment involving direct melting of sewage sludge in a melting furnace has a risk of a low melt flowability due to a high melting point of the sludge. Thus, a sludge component is adjusted in advance to lower the melting point. Generally, slaked lime $Ca(OH)_2$, silica sand $(SiO_2)$, and the like are added to the sludge to achieve a basicity, expressed as $CaO/SiO_2[w/w]$, within a predetermined range.

A phosphorus component in the sludge might volatilize into exhaust gas due to reductive reaction occurring during the melt treatment, but is immediately bonded to added iron to be metal iron phosphide (metal phosphorus compound) to be captured in the slag.

Ferrous oxide (FeO) has been known to have an effect of lowering the melting point. Thus, sludge containing ferrous oxide (FeO) is likely to have a lower melting point.

In a sludge melting method proposed in Patent document 2, a phosphorus fixing material, including trivalent metal, is added to sludge containing water, before the sludge is put into a melting surface, and phosphorus and phosphoric acid in the sludge react with the phosphorus fixing material to be a metal phosphorus compound or a metal phosphoric acid compound to be fixed in the slag generated in a furnace. The phosphorus fixing material includes: a trivalent iron compound such as ferric oxide, ferric hydroxide, ferric chloride, and ferric sulfate; and an aluminum compound such as aluminum oxide, aluminum hydroxide, and aluminum sulfate. The technique is based on a characteristic that phosphorus as a pentavalent element can easily bond to trivalent metal.

PRIOR ART DOCUMENTS

Japanese Unexamined Patent Application Publication No. 2006-15173 and Japanese Unexamined Patent Application Publication No. 2001-9500. Document JP 2000 140895 A is also disclosing a melt treatment method for sludge containing phosphorous compound, the method being intended to reduce the possibility of volatilization of a phosphorous component during melting treatment.

SUMMARY OF INVENTION

PROBLEMS TO BE SOLVED BY THE INVENTION

In each of the conventional techniques described above, the phosphorus component is captured in the slag, while being in a form of a metal compound. The slag containing such metal particle cannot be directly reused as a concrete aggregate or a cement raw material for example, and requires a costly selective separation processing to be additionally performed to remove the metal particle.

When the technique disclosed in Patent document 1 is employed, a basicity adjuster needs to be added to sludge to adjust the basicity ($CaO/SiO_2$) to be within a small range of 0.4 to 0.8, to achieve a melt flow index (MFI) of 60% or higher at about 1300°C. There have been cases where the amount of the basicity adjuster put in fails to be appropriately set to achieve the range due to variations of a composition of the sludge to be molten. In such a case, the furnace needs to be operated at a relatively high melting temperature, and it has been difficult to lower the possibility of effective volatilization of the phosphorus component. Furthermore, such an operation involves faster loss of refractories, a larger amount of consumed fossil fuel, and the like.

Unoxidized iron powder reacts with water to generate heat. Thus, iron powder can only be added to the sludge immediately before being put into the melting furnace to prevent accidental ignition or the like. Thus, uniform distribution of the iron powder to the sludge cannot be achieved, meaning that an excessive amount of iron powder needs to be added to the sludge to prevent volatilization of the phosphorus component. As a result, the metal particle, that is, the metal phosphorus compound including iron phosphide increases in the slag. In recent years, a cost of iron powder has been rising. Thus, an extremely high running cost is required for melting the phosphorus-containing material while lowering the possibility of volatilization of the phosphorus component by adding the iron powder. All things considered, a treatment method achieving a high cost performance, also in terms of a cost for recycling the slag, has been called for in the melt treatment.

In view of the above, an object of the present invention is to provide a melt treatment method for a phosphorus-containing material and a method for operating a melting furnace that can achieve reduction of an amount of a metal phosphorus compound, including iron phosphide, in slag while lowering the possibility of volatilization of a phosphorus component, and thus can achieve a high cost performance.

MEANS FOR SOLVING THE PROBLEMS

To achieve the object above, a first characteristic configuration of a melt treatment method for a phosphorus-containing material according to the present invention is, as set forth in claim 1 in the document of claims, that a melt treatment method for a phosphorus-containing material includes a pretreatment step of adjusting a water content of a phosphorus-containing material with an amount of phosphorus in terms of dry solid being 0.04% by weight or more, a melting step of melting the phosphorus-containing material, having had water adjusted in the pretreatment step, put into a melting furnace, and a cooling step of cooling and solidifying slag generated by the melting in the melting step. With an iron compound adding step of adding a divalent or a trivalent iron compound to the phosphorus-containing material executed in the pretreatment step or before or after the pretreatment step, the possibility of volatilization of a phosphorus component in the phosphorus-containing material is lowered in the melting step and the phosphorus component is captured in the slag while lowering the possibility of turning into a metal phosphorus compound including iron phosphide.

Unlike the iron powder, the trivalent iron compound is free of a risk of generating heat when being added to the phosphorus-containing material containing water such as sewage sludge. Thus, the trivalent iron compound can be added in the pretreatment step of adjusting the amount of water contained in the phosphorus-containing material or before or after the pretreatment step, and thus can be sufficiently mixed so that the phosphorus-containing material and the iron compound are uniformly distributed. When such a mixture of the trivalent iron compound and the phosphorus-containing material is put into the melting furnace, an effect of lowering the melting point can be achieved with ferrous oxide (FeO) or ferrous oxide (FeO) generated from the divalent or the trivalent iron compound put in in the melting process. The inventors have come up with a new finding that with this effect of lowering the melting point, the MFI of 60% or higher can be achieved with a basicity in a range wider than a range of 0.4 to 0.8 suitable for the phosphorus-containing material relative to iron, at the melting temperature of about 1300°C for example and phosphorus in a form other than the metal phosphorus compound is captured in the slag while lowering the possibility of volatilization of the phosphorus component in the melting target material.

According to the new finding, the MFI of 60% or higher can be achieved with a wider range of basicity. Thus, a used amount of the basicity adjuster can be reduced. The melting temperature of the slag can further be lowered with the effect of lowering the melting point with the adjusted basicity and ferrous oxide (FeO), whereby the volatilized amount of the phosphorus component can largely be reduced. Furthermore, unlike in the case where the iron powder (Fe) is added, the iron compound and the phosphorus-containing material can be uniformly mixed in advance, and thus the iron compound needs not to be excessively put in. Thus, the generated amount of metal particle, including the metal phosphorus compound mixed in the slag, can largely be reduced. Such an iron compound can be obtained at a lower cost than iron powder the cost of which has been recently rising. All things considered, a large reduction of the running cost and effective recycling of an obtained slag can be achieved.

A second characteristic configuration of the same is, as set forth in claim 2 in the same document, the phosphorus-containing material may be sewage sludge, and the pretreatment step includes adjusting water in the sewage sludge, in addition to the first characteristic configuration described above.

The sewage sludge as the phosphorus-containing material is suitably treated by the melt treatment. The melt treatment is efficiently performed with the water in the sewage sludge adjusted in the pretreatment step.

A third characteristic configuration of the same is, as set forth in claim 3 in the same document, the iron compound adding step may include adding the trivalent iron compound to achieve an amount of iron (Fe) in terms of dry solid in a range of 1 to 8% by weight, in addition to the first or the second characteristic configuration described above.

With the amount of the trivalent iron compound added to the phosphorus-containing material adjusted to achieve the amount of iron (Fe) in terms of dry solid in the range of 1 to 8% by weight, the MFI of 60% or higher can be achieved even when the melting temperature is relatively low. Thus, the phosphorus can be effectively captured in the slag, while lowering the possibility of volatilization of the phosphorus component.

A fourth characteristic configuration of the same is, as set forth in claim 4 in the same document, the iron compound adding step may use any one or a plurality of types of the trivalent iron compound including triiron tetraoxide ($Fe_3O_4$), ferric oxide ($Fe_2O_3$), ferric hydroxide ($Fe(OH)_3$), ferric chloride ($FeCl_3$), ferric sulfate ($Fe_2(SO_4)_3$), in addition to any one of the first to the third characteristic configurations described above.

The trivalent iron compound added to the phosphorus-containing material is not limited to a single type. Any one or a plurality of types of triiron tetraoxide ($Fe_3O_4$), ferric oxide ($Fe_2O_3$), ferric hydroxide ($Fe(OH)_3$), ferric chloride ($FeCl_3$), ferric sulfate ($Fe_2(SO_4)_3$), and the like can be used. For example, when the phosphorus-containing material is the sewage sludge, the iron compound adding step of adding ferric oxide ($Fe_2O_3$) may be implemented.

A fifth characteristic configuration of the same is, as set forth in claim 5 in the same document, a basicity adjusting step of adding a basicity adjuster to the phosphorus-containing material to adjust a basicity of the phosphorus-containing material to be within a range of 0.2 to 1.0 may be executed before the melting step, in addition to any one of the first to the fourth characteristic configurations described above.

With a combination of an effect of the basicity of the phosphorus-containing material adjusted to be within the range of 0.2 to 1.0 and the effect of lowering the melting point provided by ferrous oxide (FeO) generated, during the melt treatment, from the divalent or the trivalent iron compound added in the iron compound adding step, a favorable MFI can be achieved at a relatively low melting point.

A sixth characteristic configuration of the same is, as set forth in claim 6 in the same document, a basicity adjusting step of adding a basicity adjuster to the phosphorus-containing material to adjust a basicity of the phosphorus-containing material to be within a range of 0.7 ± 0.1 may be executed before the melting step, in addition to any one of the first to the fourth characteristic configurations described above.

With a combination of an effect of the basicity of the phosphorus-containing material adjusted to be within the range of 0.7 ± 0.1 and the effect of lowering the melting point provided by ferrous oxide (FeO) generated, during the melt treatment, from the divalent or the trivalent iron compound added in the iron compound adding step, a favorable MFI can be achieved at an even lower melting point, whereby the possibility of volatilization of the phosphorus component can be effectively lowered.

A seventh characteristic configuration of the same is, as set forth in claim 7 in the same document, the iron compound adding step may include an iron-phosphorus-silicon ratio adjusting step of adding the iron compound to achieve an iron (Fe) phosphorus (P) silicon (Si) ratio (=Fe/(P+Si) [mol/mol]) within a range of 0.2 to 0.8, the iron-phosphorus-silicon ratio adjusting step being executed before the melting step, in addition to the sixth characteristic configuration described above.

With the iron compound adding step of adding the iron compound to achieve the iron-phosphorus-silicon ratio within a range of 0.2 to 0.8, a preferable MFI can be achieved at an extremely lower melting point compared with a conventional configuration. Thus, the possibility of volatilization of the phosphorus component can be effectively lowered, and a used amount of fossil fuels can be reduced.

A eighth characteristic configuration of the same is, as set forth in claim 8 in the same document, the iron compound adding step and the basicity adjusting step may be executed before the melting step to achieve a MFI of 60% or higher, in addition to any one of the fifth to the seventh characteristic configurations described above.

By adjusting the added amounts of the iron compound added in the iron compound adding step and the basicity adjuster added in the basicity adjusting step, the melt treatment can be stably performed at a relatively low melting point, and the possibility of volatilization of the phosphorus component can be effectively lowered.

A characteristic configuration of a method for operating a melting furnace according to the present invention is, as set forth in claim 9 in the document of claims, that a method for operating a melting furnace that melts a phosphorus-containing material with an amount of phosphorus in terms of dry solid being 0.04% by weight or more, the phosphorus-containing material containing water an amount of which has been adjusted, includes adding a divalent or a trivalent iron compound to the phosphorus-containing material in advance to achieve an amount of iron (Fe) in terms of dry solid in a range of 1 to 8% by weight, putting the phosphorus-containing material after being agitated into the melting furnace, and melting the phosphorus-containing material with a reducing atmosphere achieved around the iron component.

EFFECTS OF INVENTION

As described above, the present invention can provide a melt treatment method for a phosphorus-containing material and a method for operating a melting furnace that can achieve reduction of an amount of a metal phosphorus compound, including iron phosphide, in slag while lowering the possibility of volatilization of a phosphorus component, and thus can achieve a high cost performance.

BRIEF DESCRIPTION OF DRAWINGS

[Fig. 1] Fig. 1 is a diagram illustrating a melt treatment method for a phosphorus-containing material according to the present invention.
[Fig. 2] Figs. 2(a) and 2(b) are each a diagram illustrating a melting furnace.
[Fig. 3] Fig. 3(a) is a characteristic diagram illustrating a basicity and a MFI of sludge to which iron powder or ferric oxide has been added, and Fig. 3(b) is a characteristic diagram illustrating an iron (Fe) phosphorus (P) silicon (Si) ratio (=Fe/(P+Si)) and a phosphorus fixation rate of sludge to which iron powder or ferric oxide has been added.
[Fig. 4] Fig. 4 is a characteristic diagram illustrating a basicity and a MFI of sludge with respect to an added amount of iron (Fe).
[Fig. 5] Fig. 5(a) is a diagram illustrating slag obtained by melting sludge to which ferric oxide has been added, and Fig. 5(b) is a diagram illustrating slag obtained by melting sludge to which iron powder has been added.
[Fig. 6] Figs. 6(a) to 6(c) are each a diagram illustrating a MFI test.
[Fig. 7] Fig. 7(a) is a diagram illustrating an example of a state where phosphorus in a non-metal state is captured in slag, that is, a state where phosphorus atoms are captured in glass via crosslinking oxygen atoms, and Fig. 7(b) is a diagram illustrating an example where the phosphorus atoms not including oxygen atoms are captured in a state of exhibiting metal-like properties such as extensibility, glossiness, and high thermal conductivity.
[Fig. 8] Fig. 8 is a diagram illustrating a conventional sewage sludge melt treatment method.

EMBODIMENTS FOR CARRYING OUT THE INVENTION

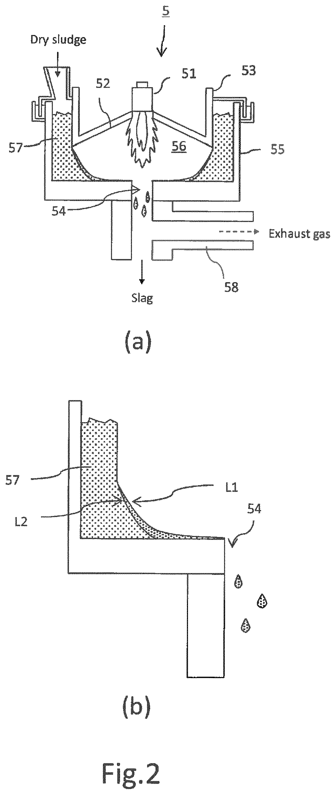

An embodiment of a melt treatment method for a phosphorus-containing material and a method for operating a melting furnace according to the present invention is described below.

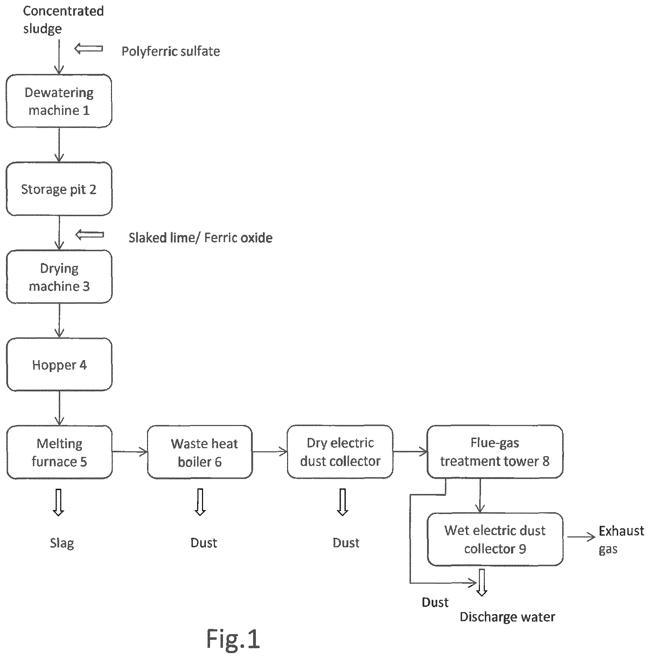

Fig. 1 illustrates a melt treatment method performed in a case where the phosphorus-containing material is sewage sludge. A concentrated sludge is extracted as excess sludge from a sewage-treatment device that performs biological treatment based on an activated sludge method and a membrane bioreactor method. Polyferric sulfate $\{(Fe_2OH)_n(SO_4)_{3-n/2}\}_m$, as an example of a flocculation agent, is added to the concentrated sludge and thus the concentrated sludge is flocculated. Then, a dewatering machine 1, including a screw press and a filter press, performs a dewatering treatment, and the resultant sludge is stored in a storage pit 2. Through the dewatering treatment, a dewatered sludge has a percentage of moisture content of about 70 to 85%.
Slaked lime ($Ca(OH)_2$) or $SiO_2$ as a basicity adjuster and ferric oxide ($Fe_2O_3$) as a trivalent iron compound are added to the dewatered sludge stored in the storage pit 2. Then, the resultant sludge is put into a steam drying machine 3, and thus is subjected to drying treatment while being agitated to be a dry sludge and is then stored in a hopper 4. The dry sludge obtained by the drying treatment has a percentage of moisture content of about 20 to 30%.
Processing of flocculating, dewatering, and drying the concentrated sludge corresponds to a pretreatment step of adjusting water (removing water in this example) in the sewage sludge. A step of adding the basicity adjuster corresponds to a basicity adjusting step. A step of adding ferric oxide ($Fe_2O_3$) to the sewage sludge corresponds to an iron compound adding step. The iron compound adding step may be executed in the pretreatment step or before or after the pretreatment step.
A method that can be performed for adjusting water in the pretreatment step includes: a method involving a mechanical mechanism such as filter pressing, centrifugal dewatering, and screw pressing; a method involving direct or indirect heating using reaction heat generated by chemical reaction, sensible heat of steam or exhaust gas, or the like; and a method of adding waste paper and dried sludge to reduce a relative amount of water.
With the pretreatment step, the percentage of moisture content is adjusted to be 30% or less to be suitable for melting. The sewage sludge to which the basicity adjuster and the trivalent iron compound have been added is conveyed on a conveyer from the hopper 4 to be put into a melting furnace 5, to be subjected to a melt treatment. Slag, obtained by thus melting the sewage sludge in the melting furnace 5, is then cooled and solidified. A melting furnace that can be used in the processing includes a surface melting furnace, an electric melting furnace, a swirling melting furnace, and a coke bed furnace. The swirling melting furnace and the surface melting furnace are particularly suitable. In this embodiment, a rotary surface melting furnace as one type of the surface melting furnace is used.
As illustrated in Fig. 2, a rotary surface melting furnace 5 includes a rotation mechanism in which an inner cylinder 53, standing from a circumference of a ceiling 52, and a bottomed outer cylinder 55, with a slag port 54 formed at the center of a bottom portion, are coaxially arranged, and the outer cylinder 55 rotates about the axis. The outer cylinder 55 is configured to be rotatable with respect to the inner cylinder 53.

The inner cylinder 53 has a ceiling provided with a combustor 51. The combustor 51 includes a burner that performs combustion with fuel, supplied from a fuel tank, mixed with air supplied from a blower. The temperature in a main combustion chamber 56 is adjusted by adjusting a supplied amount of the fuel, to set the temperature of the molten slag, obtained by melting the sewage sludge, to be about 1300°C.

The dried sludge put in between the inner cylinder 53 and the outer cylinder 55 (an accumulation part 57) is supplied from a lower end portion of the inner cylinder 53 to the main combustion chamber 56, through relative rotation between the inner cylinder 53 and the outer cylinder 55. A surface of the sludge facing the combustor 51 is molten by combustion flame of the combustor 51. The molten slag is discharged through the slag port 54, formed at the center of the bottom surface of the main combustion chamber 56, as droplets. The droplets of the molten slag dropped from the slag port 54 are quenched in a water tank disposed below, to be water granulated slag.

As described above, the sludge is molten in the melting step executed in the rotary surface melting furnace 5. Then, a cooling step of cooling and solidifying the molten slag is executed in the water tank disposed below the slag port 54.

Referring back to Fig. 1, exhaust gas discharged from the melting furnace 5 is treated in a waste heat boiler 6, a dry electric dust collector 7, a flue-gas treatment tower 8, and a wet electric dust collector 9. Discharge water from the wet electric dust collector 9 is purified in a water treatment equipment.

When the above described kneaded product, obtained by adding ferric oxide ($Fe_2O_3$) to the sludge, is put into the melting furnace, a reducing atmosphere is achieved around ferric oxide ($Fe_2O_3$) while the melting of the sewage sludge is in process. Ferrous oxide (FeO) is generated by reduction under the reducing atmosphere, and provides an effect of lowering the melting point. With this effect of lowering the melting point, a MFI of 60% or higher can be achieved for the sludge, with a range of basicity wider than a range of 0.4 to 0.8 as a preferable range for iron, at a melting temperature of about 1300°C for example. Furthermore, the possibility of volatilization of the phosphorus component in the sludge is lowered, whereby phosphorus in a non-metal form is captured in the slag. More specifically, the possibility of the phosphorus component in the sewage sludge turning into a metal phosphorus compound including iron phosphide is lowered, and thus the phosphorus component is captured in the slag while being in a non-metal form.

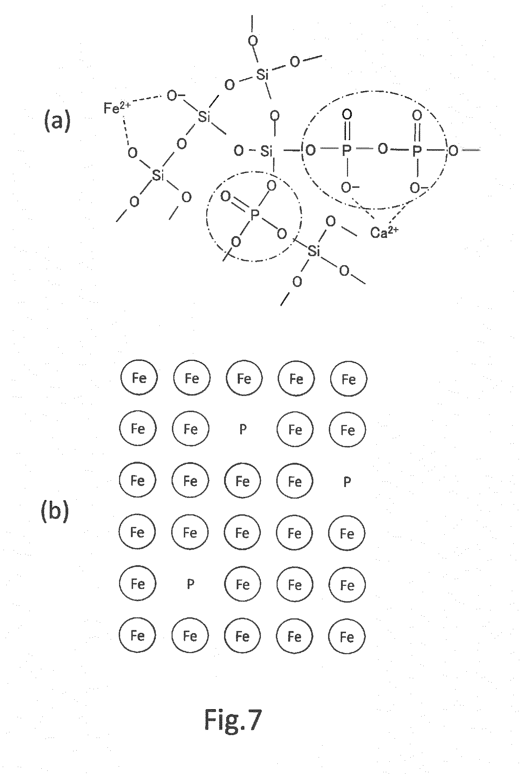

Fig. 7(a) illustrates a bond state of a part of the elements constituting glass (slag) and a state in which phosphorus (P) in a non-metal form is captured in the slag (the portions enclosed by the dashed-line circles in the figure). In other words, the phosphorus element (P) is captured in glass via crosslinking oxygen atoms (O).

Fig. 7(b) illustrates an example where the phosphorus element (P) including no crosslinking oxygen atom and having a metal-like property such as extensibility, glossiness, and a high thermal conductivity is captured in slag. This is the metal particle such as a metal phosphorus compound including iron phosphide.

Even when ferric oxide ($Fe_2O_3$) is used instead of iron powder (Fe), it does not necessarily mean that the entire phosphorus is in a non-metal form to be captured in the slag. Thus, part of the phosphorus is captured in the slag while being in a form of iron phosphide, and thus part of the phosphorus volatilizes. Still, a majority of ferric oxide ($Fe_2O_3$) turns into ferrous oxide (FeO) to be fixed in the slag, and a majority of phosphorus in the sewage sludge is captured in the slag, while being in a non-metal form.

The reducing atmosphere needs not to be achieved in the entire main combustion chamber. The reducing atmosphere only needs to be achieved at least around the ferric oxide ($Fe_2O_3$). The reducing atmosphere is achieved with reducing gas, such as carbon monoxide, generated through thermal decomposition of an organic matter in the sludge.

When the furnace remains to be in the reducing atmosphere for a long period of time, iron in $1FeO\text{-}mP_2O_5\text{-}nCaO\text{-}oSiO_2$ based slag (1, m, n, and o being any integer) is reduced to be deposited as a metal particle, and the phosphorus component is volatilized. Thus, a favorable condition for capturing the phosphorus component in the slag is achieved with a local reducing atmosphere and a weak reducing atmosphere.

As illustrated in Fig. 2(b), a melting target material put into the melting furnace starts to melt from its surface and is discharged through the slag port 54 at the center of the bottom portion as droplets. The thermal decomposition of organic component or the like in the melting target material occurs at a boundary between a molten slag layer L1 and an un-molten layer L2, whereby the reducing atmosphere is achieved. Under the reducing atmosphere thus achieved, the ferric oxide ($Fe_2O_3$) is reduced to be the ferrous oxide (FeO) that provides an effect of lowering the melting point of the slag, and is fixed in the slag in a state illustrated in Fig. 7(a). With the melting point of the slag thus lowered, the possibility of volatilization of phosphorus is lowered, and iron is captured in the slag without bonding to the metal phosphorus compound. All things considered, the reducing atmosphere only needs to be achieved around a portion where the melting target material as the phosphorus-containing material turns into slag, and an oxidizing atmosphere or a reducing atmosphere may be achieved in the furnace.

An adjustable range of basicity wider than the range of 0.4 to 0.8 preferable for the iron powder (Fe) can be achieved. Thus, a used amount of the basicity adjuster can be reduced. With the adjusted basicity and the ferrous oxide (FeO), an effect of lowering the melting point can be achieved, whereby the melting point of the slag can further be lowered. Thus, the amount of volatilization of the phosphorus component, which may result in clogging or corroding of the exhaust-gas treatment equipment or the like, can be largely reduced.

Unlike the iron powder (Fe), the trivalent iron compound such as the ferric oxide ($Fe_2O_3$) is free of a risk of generating heat when being added to watery sludge. Thus, the iron compound can be added at any timing during the pretreatment step of removing water from the sewage sludge or before or after the pretreatment. Thus, unlike in the case where the iron powder (Fe) is added, the iron compound and the sludge can be kneaded in advance. This means that the iron compound can be uniformly distributed in the sludge, and needs not to be excessively put in. All things considered, the amount of metal particles mixed in the slag can be largely reduced.

Preferably, in the iron compound adding step, a divalent or a trivalent iron compound is added in such a manner that the amount of iron (Fe) in terms of dry solid DS in a range of 1 to 8% by weight, preferably, 3 to 5% by weight is achieved. Thus, the MFI of 60% or higher can be achieved even when the melting temperature is relatively low. Thus, phosphorus can be effectively captured in the slag while the possibility of volatilization of the phosphorus component is lowered.

The basicity adjusting step of adding the basicity adjuster to the sewage sludge to adjust the basicity of the sewage sludge to be in a range of 0.2 to 1.0 is preferably executed before the melting step. With a combination of the effect of lowering the melting point provided by the ferrous oxide (FeO) generated, during the melt treatment, from the trivalent iron compound added in the iron compound adding step and the effect of the basicity, a favorable MFI can be achieved at a lower melting point compared with a configuration where the iron powder (Fe) is added.

Furthermore, the basicity adjusting step of adding the basicity adjuster to the sewage sludge to adjust the basicity of the sewage sludge to be in the range of 0.7 ± 0.1 is preferably executed before the melting step. With a combination of the effect of lowering the melting point provided by the ferrous oxide (FeO) generated, during the melt treatment, from the trivalent iron compound added in the iron compound adding step and the effect of the basicity, a favorable MFI can be achieved at an even lower melting point, whereby the possibility of volatilization of the phosphorus component can be effectively lowered.

Furthermore, the iron compound adding step includes an iron-phosphorus-silicon ratio adjusting step of adding the iron compound to achieve the iron (Fe) phosphorus (P) silicon (Si) ratio (=Fe/(P+Si) [mol/mol]) in a range of 0.2 to 0.8, and the iron-phosphorus-silicon ratio adjusting step is preferably executed before the melting step.

With the iron compound adding step of adding the iron compound to achieve the iron-phosphorus-silicon ratio in the range of 0.2 to 0.8, a preferable MFI can be achieved at an extremely lower melting point compared with a conventional configuration. Furthermore, a phosphorus fixation rate of 80% or higher can be achieved. All things considered, the possibility of volatilization of the phosphorus component can be effectively lowered, and a used amount of fossil fuels can be reduced.

The iron compound adding step and the basicity adjusting step are preferably executed before the melting step to achieve the MFI of 60% or higher. Thus, the melt treatment can be stably performed at a relatively low temperature, and the possibility of volatilization of the phosphorus component can be effectively lowered.

Thus, the melting furnace of melting the sewage sludge with water adjusted/removed is preferably operated as follows. Specifically, the trivalent iron compound is added to the sewage sludge in advance to achieve the amount of iron (Fe) in terms of dry solid DS in a range of 1 to 8% by weight. Then, the resultant sewage sludge is agitated and then put into the melting furnace, to be molten with the reducing atmosphere achieved around the iron compound.

The basicity adjusting step and the iron compound adding step are not limited to the order described above, and may be a step of simultaneously adding the basicity adjuster and the iron compound, which have been mixed in advance.

The present invention is effective to the phosphorus-containing material in which an amount of the phosphorus in terms of dry solid is 0.04% by weight or more. Such a phosphorus-containing material is not limited to the sewage sludge, and includes field soil, livestock excreta, night soil sludge, and a residue of phosphorus-containing ores. For example, a phosphorus contained amount is 0.5 to 3% by weight in the sewage sludge, 0.04 to 1% by weight in the field soil, 0.5 to 3% by weight in the livestock excreta, and 2 to 3% by weight in the night soil sludge.

[Example]

Results of experiments for melt characteristics of sewage sludge to which the trivalent iron compound is added are described below.

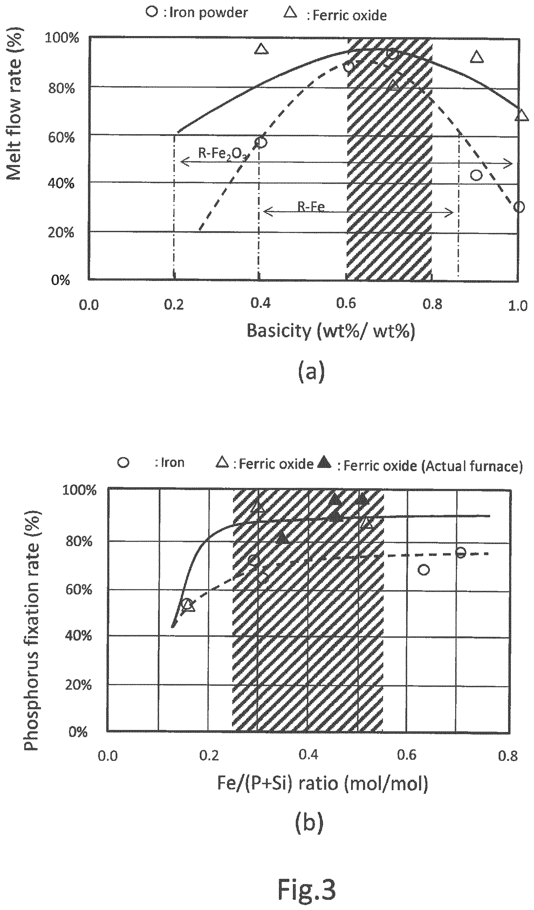

Fig. 3(a) illustrates melt characteristics of a specimen heated at 1300°C with an electric furnace. This specimen was obtained by adding iron powder (Fe) or ferric oxide ($Fe_2O_3$) to sample sludge obtained by adding a basicity adjuster to pretreated sewage sludge to achieve a larger range of suitable basicity. In the figure, a broken line represents the characteristic of the iron powder, and a solid line represents the characteristic of ferric oxide.

The iron (Fe) phosphorus (P) silicon (Si) ratio (=Fe/(P+Si) [mol/mol]) of the sample sludge was 0.45, and an added amount of each of iron powder and ferric oxide in terms of dry solid DS was 5% by weight.

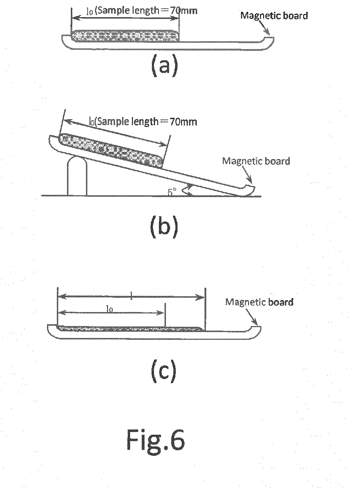

As illustrated in Figs. 6(a), 6(b), and 6(c), a melt flow test started by providing the sample on one side of a magnetic board. Then, the magnetic board was tilted by a predetermined angle (5°) so that the sample portion is raised, and is stationary maintained at this state for a predetermined time (15 minutes) in the electric furnace maintained at the predetermined temperature. Then, the magnetic board and the sample were taken out, to be cooled to a room temperature, and the state of the sample was measured. Specifically, a value was calculated based on the following formula as the MFI:

$$MFI \ (M \ value) = (L - L_0)/L_0 \times 100.$$

Generally, a temperature at which the MFI of 60% is achieved is evaluated as a melt flow point. The melting furnace can be operated with a MFI of 40%, and the MFI of 60% or higher is regarded as high meltability. The magnetic board with a size of 150 mm × 20 mm × 7 mm (length × width × height) was used. The sample with a volume of about 10 ml and a length of 70 mm was provided on the magnetic board.

As illustrated in Fig. 3(a), it was found that when the iron powder was added, the MFI of 60% or higher was achieved with the basicity in a range (R-Fe) from approximately 0.4 to 0.8, whereas when the ferric oxide was added, the MFI of 60% or higher was achieved with the basicity in a range (R-Fe$_2$O$_3$) from approximately 0.2 to 1.0.

Specifically, it has been confirmed that because adding the ferric oxide can increase the adjustment range of basicity with which the MFI of 60% or higher can be achieved, and thus can reduce the added amount of the basicity adjuster.

Furthermore, an extremely high MFI was achievable with a basicity in a range of 0.7 ± 0.1. With the basicity adjusted to be in this range, the melting furnace can be favorably operated even at a melting temperature lower than 1300°C by about 50°C. As a result, it has been found that the possibility of volatilization of the phosphorus component in the sludge can be more effectively lowered.

Fig. 3(b) illustrates a phosphorus fixation rate in a case where a specimen was heated at 1300°C in an electric furnace. The specimen was obtained by adding iron powder or ferric oxide to a sample sludge obtained by adding the basicity adjuster to the pretreated sewage sludge to adjust the basicity to 0.7, to change the iron (Fe) phosphorus (P) silicon (Si) ratio (=Fe/(P+Si) [mol/mol]). In the figure, a broken line represents the characteristic of the iron powder, and a solid line represents the characteristic of ferric oxide.

As is apparent from the characteristic indicated by the solid line in Fig. 3(b), high phosphorus fixation rates of approximately 80% and 90% were achieved with the iron (Fe) phosphorus (P) silicon (Si) ratio of the sample sludge respectively adjusted to 0.2 and 0.4 or more, by adding the ferric oxide.

In the characteristic diagram, data representing an operation of an actual furnace with the ferric oxide added to the sludge is plotted with black triangles. More specifically, the black triangles represent data sampled with the actual furnace operated with the basicity adjusted to be in the range of 0.7 ± 0.1 and the iron (Fe) phosphorus (P) silicon (Si) ratio set to 0.35, 0.45, and 0.51.

Thus, it has been found that the iron (Fe) phosphorus (P) silicon (Si) ratio is preferably adjusted to be in a range of 0.2 to 0.8, more preferably adjusted to be in a range of 0.25 to 0.55, and most preferably adjusted to be in a range of 0.30 to 0.50. The iron (Fe) phosphorus (P) silicon (Si) ratio adjusted to be in a range of 0.30 to 0.50 is preferable because the phosphorus can be fixed in the slag with the added amount of the ferric oxide reduced, and the running cost can be reduced. A lower phosphorus fixation rate can achieve a lower running cost required for the iron compound, but requires more frequent cleaning of dust attached to exhaust-gas treatment equipment or a flue. Thus, the phosphorus fixation rate may be at least adjusted to about 60% considering the tradeoff between the cleaning frequency and the running cost. Furthermore, it has been confirmed that the same applies to a case where the basicity is in a range of about 0.2 to 1.0.

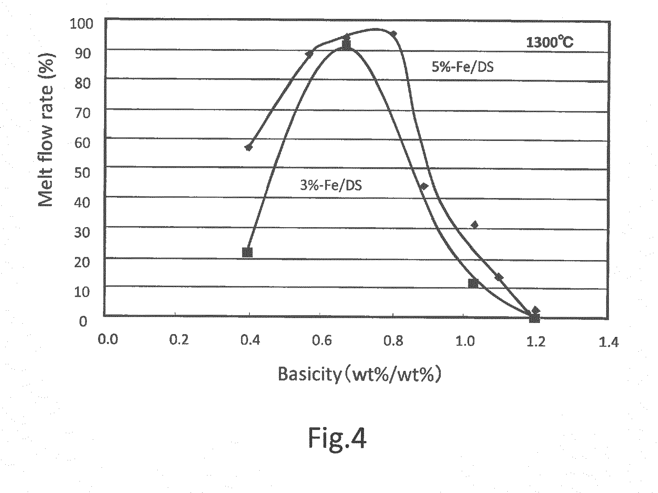

Fig. 4 illustrates MFI characteristics in a case where the ferric oxide was added to the sample sludge with a basicity in a range of about 0.2 to 1.2, to achieve an amount of iron (Fe) in terms of dry solid DS in a range of 3 to 5% by weight, and the sample was heated at 1300°C in an electric furnace. It has been confirmed that the MFI of 60% or higher was achievable over a wide range when the amount of iron (Fe) in terms of dry solid DS is adjusted to be in a range of 3 to 5% by weight, while this may be affected by how the basicity is adjusted.

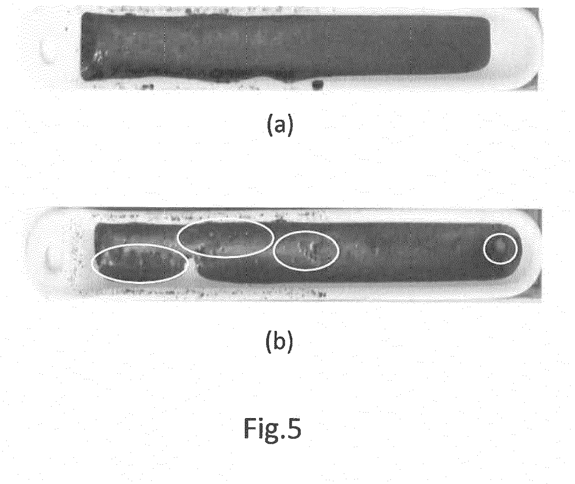

Figs. 5(a) and 5(b) each illustrate a photograph of the slag as a result of melting the specimen, with the basicity adjusted to 0.7 and the amount of iron (Fe) in terms of dry solid DS adjusted to 3% by weight by adding the iron powder or ferric oxide, at 1300°C. Fig. 5(a) illustrates slag in the case where the ferric oxide has been added. Fig. 5(b) illustrates slag in the case where the iron powder has been added.

Deposition of spherical metal particle was monitored in the slag obtained by adding the iron powder (Fe) to the sludge (see areas surrounded by white circles in Fig. 5(b)). It has been found through component analysis that the metal particle was a metal phosphorus compound mainly including iron (Fe) and iron phosphide (Fe$_2$P). On the contrary, almost no metal particle can be found in Fig. 5(a), because the ferric oxide (Fe$_2$O$_3$) added to the sludge was reduced to the ferrous oxide (FeO) to be melted in the slag. Thus, it has been found that the phosphorus component in the sludge did not bond with iron to be the metal phosphorus compound, and thus the phosphorus in a non-metal form was captured in the slag.

The ferric oxide used in the present embodiment was powder with a median size of 11 $\mu$m ($d_{50}$). It is to be noted that the median size may be about 1 mm ($d_{50}$) or more, and a smaller particle size is more preferable for pursuing faster reaction speed.

Each of the "iron powder", the "ferric oxide" and the "iron compound" in the specification of the present application is not limited to a purity of 100%, and may include a certain amount of impurities. More specifically, the "iron powder" may partially include a compound such as iron oxide, and the iron compound may be a compound with iron remaining without being in a form of a compound. In other words, the described terms include a matter mainly including the material. In this context, an iron compound may be a mixture of different iron compounds.

## Claims

1. A melt treatment method for a phosphorus-containing material, the method comprising:

   a pretreatment step of adjusting a water content of a phosphorus-containing material with an amount of phosphorus in terms of dry solid being 0.04% by weight or more;
   a melting step of melting the phosphorus-containing material, having had water adjusted in the pretreatment step, put into a melting furnace; and
   a cooling step of cooling and solidifying slag generated by the melting in the melting step,

   wherein
   with an iron compound adding step of adding a trivalent iron compound to the phosphorus-containing material executed in the pretreatment step or before or after the pretreatment step, with the reducing atmosphere achieved around the trivalent iron compound by pyrolysis gas generated in pyrolysis of organic matter included in phosphorus-containing material, and with the phosphorus-containing material being melted in the state that the trivalent iron compound is reduced to a divalent iron compound, possibility of volatilization of a phosphorus component in the phosphorus-containing material is lowered in the melting step and the phosphorus component is captured in the slag while lowering possibility of turning into a metal phosphorus compound including iron phosphide.

2. The melt treatment method for a phosphorus-containing material according to claim 1, wherein the phosphorus-containing material is sewage sludge, and

the pretreatment step includes adjusting water in the sewage sludge.

3. The melt treatment method for a phosphorus-containing material according to claim 1 or 2, wherein the iron compound adding step includes adding the trivalent iron compound to achieve an amount of iron (Fe) in terms of dry solid in a range of 1 to 8% by weight.

4. The melt treatment method for a phosphorus-containing material according to any one of claims 1 to 3, wherein the iron compound adding step uses any one or a plurality of types of the trivalent iron compound including triiron tetraoxide ($Fe_3O_4$), ferric oxide ($Fe_2O_3$), ferric hydroxide ($Fe(OH)_3$), ferric chloride ($FeCl_3$), ferric sulfate ($Fe_2(SO_4)_3$).

5. The melt treatment method for a phosphorus-containing material according to any one of claims 1 to 4, wherein a basicity adjusting step of adding a basicity adjuster to the phosphorus-containing material to adjust a basicity of the phosphorus-containing material to be within a range of 0.2 to 1.0 is executed before the melting step.

6. The melt treatment method for a phosphorus-containing material according to any one of claims 1 to 4, wherein a basicity adjusting step of adding a basicity adjuster to the phosphorus-containing material to adjust a basicity of the phosphorus-containing material to be within a range of 0.7 $\pm$ 0.1 is executed before the melting step.

7. The melt treatment method for a phosphorus-containing material according to claim 6, wherein the iron compound adding step includes an iron-phosphorus-silicon ratio adjusting step of adding the iron compound to achieve an iron (Fe) phosphorus (P) silicon (Si) ratio (=Fe/(P+Si) [mol/mol]) within a range of 0.2 to 0.8, the iron-phosphorus-silicon ratio adjusting step being executed before the melting step.

8. The melt treatment method for a phosphorus-containing material according to any one of claims 5 to 7, wherein the iron compound adding step and the basicity adjusting step are executed before the melting step to achieve a melt flow index of 60% or higher.

9. A method for operating a melting furnace that melts a phosphorus-containing material with an amount of phosphorus in terms of dry solid being 0.04% by weight or more, the phosphorus-containing material containing water an amount of which has been adjusted, the method comprising:

   adding a trivalent iron compound to the phosphorus-containing material in advance to achieve an amount of iron (Fe) in terms of dry solid in a range of 1 to 8% by weight; agitating the phosphorus-containing material; putting the phosphorus-containing material into the melting furnace; and melting the phosphorus-containing material with the reducing atmosphere achieved around the trivalent iron component by pyrolysis gas generated in pyrolysis of organic matter included in phosphorus-containing material, and with the phosphorus-containing material being melted in the state that the trivalent iron compound is reduced to a divalent iron compound.

**Patentansprüche**

1. Schmelzbehandlungsverfahren für ein phosphorhaltiges Material, wobei das Verfahren Folgendes umfasst:

einen Vorbehandlungsschritt des Einstellens eines Wassergehalts eines phosphorhaltigen Materials, wobei eine Menge von Phospor in Form von trockenem Feststoff 0.04 Gewichts-% oder mehr ist; einen Schmelzschritt des Schmelzens des phosphorhaltigen Materials, bei dem Wasser in dem Vorbehandlungsschritt eingestellt wurde, platziert in einem Schmelzofen; und einen Kühlschritt des Kühlens und Verfestigens von Schlacke, die durch das Schmelzen in dem Schmelzschritt generiert wird, wobei da ein Eisenverbindungshinzufügungsschritt des Hinzufügens einer trivalenten Eisenverbindung zu dem phosphorhaltigen Material ausgeführt wird in dem Vorbehandlungsschritt oder vor oder nach dem Vorbehandlungsschritt, da die reduzierende Atmosphäre um die trivalente Eisenverbindung herum durch Pyrolysegas erzielt wird, generiert in der Pyrolyse von organischem Material, das in dem phosphorhaltigen Material enthalten ist, und da das phosphorhaltige Material in dem Zustand geschmolzen wird, in dem die trivalente Eisenverbindung zu einer divalenten Eisenverbindung reduziert ist, die Möglichkeit einer Volatilisierung einer Phosphorkomponente in dem phosphorhaltigen Material in dem Schmelzschritt verringert wird, und die Phosphorkomponente in der Schlacke gefangen wird, während die Möglichkeit einer Umwandlung in eine metallische Phosphorverbindung einschließlich Eisenphosphid verringert wird.

2. Schmelzbehandlungsverfahren für ein phosphorhaltiges Material nach Anspruch 1, wobei das phosphorhaltige Material Abwasserschlamm ist, und der Vorbehandlungsschritt ein Einstellen von Wasser in dem Abwasserschlamm enthält.

3. Schmelzbehandlungsverfahren für ein phosphorhaltiges Material nach Anspruch 1 oder 2, wobei der Eisenverbindungshinzufügungsschritt ein Hinzufügen der trivalenten Eisenverbindung umfasst zur Erzielung einer Menge von Eisen (Fe) in Form von trockenem Feststoff in einem Bereich von 1 bis 8 Gewichts-%.

4. Schmelzbehandlungsverfahren für ein phosphorhaltiges Material nach einem der Ansprüche 1 bis 3, wobei der Eisenverbindungshinzufügungsschritt eine oder mehrere Arten der trivalenten Eisenverbindung verwendet, einschließlich Trieisentetraoxid ($Fe_3O_4$), Eisenoxid ($Fe_2O_3$), Eisenhydroxid ($Fe(OH)_3$), Eisenchlorid ($FeCl_3$), Eisensulfat ($Fe_2(SO_4)_3$).

5. Schmelzbehandlungsverfahren für ein phosphorhaltiges Material nach einem der Ansprüche 1 bis 4, wobei vordem Schmelzschritt ein Basizitätseinstellschritt des Hinzufügens eines Basizitätseinstellstoffs zu dem phosphorhaltigen Material ausgeführt wird, um eine Basizität des phosphorhaltigen Materials so einzustellen, dass sie innerhalb eines Bereichs von 0.2 bis 1.0 ist.

6. Schmelzbehandlungsverfahren für ein phosphorhaltiges Material nach einem der Ansprüche 1 bis 4, wobei vordem Schmelzschritt ein Basizitätseinstellschritt des Hinzufügens eines Basizitätseinstellstoffs zu dem phosphorhaltigen Material ausgeführt wird, um eine Basizität des phosphorhaltigen Materials so einzustellen, dass sie innerhalb eines Bereichs von $0.7 \pm 0.1$ ist.

7. Schmelzbehandlungsverfahren für ein phosphorhaltiges Material nach Anspruch 6, wobei der Eisenverbindungshinzufügungsschritt einen Eisen-Phosphor-Silizium-Verhältnis-Einstellschritt des Hinzufügens der Eisenverbindung umfasst, um ein Eisen (Fe)-Phosphor (P)-Silizium (Si)-Verhältnis (=Fe/(P+Si) [mol/mol]) innerhalb eines Bereichs von 0.2 bis 0.8 zu erzielen, wobei der Eisen-Phosphor-Silizium-Verhältnis-Einstellschritt vor dem Schmelzschritt ausgeführt wird.

8. Schmelzbehandlungsverfahren für ein phosphorhaltiges Material nach einem der Ansprüche 5 bis 7, wobei der Eisenverbindungshinzufügungsschritt und der Basizitätseinstellschritt vor dem Schmelzschritt ausgeführt werden, um einen Schmelzfließindex von 60% oder höher zu erzielen.

9. Verfahren zum Betreiben eines Schmelzofens, das ein phosphorhaltiges Material schmilzt, wobei eine Menge von Phosphor in Form von trockenem Feststoff 0.04 Gewichts-% oder mehr ist, wobei das phosphorhaltige Material Wasser enthält, dessen Menge eingestellt worden ist, wobei das Verfahren Folgendes umfasst:

Hinzufügen einer trivalenten Eisenverbindung zu dem phosphorhaltigen Material vorab, um eine Menge von Eisen (Fe) in Form von trockenem Feststoff in einem Bereich von 1 bis 8 Gewichts-% zu erzielen;
Umwälzen des phosphorhaltigen Materials;
Platzieren des phosphorhaltigen Materials in dem Schmelzofen; und
Schmelzen des phosphorhaltigen Materials, wobei die reduzierende Atmosphäre um die trivalente Eisenverbindung herum durch Pyrolysegas erzielt wird, das in einer Pyrolyse von organischem Material generiert wird, das in dem phosphorhaltigen Material enthalten ist, und wobei das phosphorhaltige Material in dem Zustand geschmolzen wird, in dem die trivalente Eisenverbindung zu einer divalenten Eisenverbindung reduziert ist.

**Revendications**

1. Procédé de traitement de fusion d'une matière contenant du phosphore, le procédé comprenant:

une étape de prétraitement consistant à ajuster la teneur en eau d'un matériau contenant du phosphore avec une quantité de phosphore en termes de solide sec de 0,04 % en poids ou plus ;
une étape de fusion consistant à faire fondre le matériau contenant du phosphore, dont la teneur en eau a été ajustée lors de l'étape de prétraitement, dans un four de fusion; et
une étape de refroidissement consistant à refroidir et à solidifier les scories générées par la fusion dans l'étape de fusion, dans laquelle
avec une étape d'ajout de composé de fer consistant à ajouter un composé de fer trivalent au matériau contenant du phosphore exécutée dans l'étape de prétraitement ou avant ou après l'étape de prétraitement, l'atmosphère réductrice étant obtenue autour du composé de fer trivalent par le gaz de pyrolyse généré lors de la pyrolyse de la matière organique incluse dans le matériau contenant du phosphore, et le matériau contenant du phosphore en fusion de sorte que le composé de fer trivalent est réduit en un composé de fer divalent, la possibilité de volatilisation d'un composant de phosphore dans le matériau contenant du phosphore est réduite dans l'étape de fusion et le composant de phosphore est capturé dans les scories tout en réduisant la possibilité de se transformer en un composé de phosphore métallique comprenant du phosphure de fer.

2. Procédé de traitement de fusion d'un matériau contenant du phosphore selon la revendication 1, dans lequel
la matière contenant du phosphore est une boue d'épuration, et
l'étape de prétraitement comprend l'ajustement de l'eau dans les boues d'épuration.

3. Procédé de traitement de fusion d'un matériau contenant du phosphore selon les revendications 1 ou 2, dans lequel l'étape d'ajout de composé de fer comprend l'ajout du composé de fer trivalent pour obtenir une quantité de fer (Fe) en termes de solide sec dans une plage de 1 à 8 % en poids.

4. Procédé de traitement de fusion d'un matériau contenant du phosphore selon l'une quelconque des revendications 1 à 3, dans lequel l'étape d'addition de composé de fer utilise l'un quelconque ou une pluralité de types du composé de fer trivalent comprenant le tétraoxyde de trifer ($Fe_3O_4$), l'oxyde ferrique ($Fe_2O_3$), l'hydroxyde ferrique ($Fe(OH)_3$), le chlorure ferrique ($FeCl_3$), le sulfate ferrique ($Fe_2(SO_4)_3$).

5. Procédé de traitement de fusion d'un matériau contenant du phosphore selon l'une quelconque des revendications 1 à 4, dans lequel une étape d'ajustement de la basicité consistant à ajouter un ajusteur de basicité au matériau contenant du phosphore pour ajuster une basicité du matériau contenant du phosphore devant être comprise dans une plage de 0,2 à 1,0 est exécutée avant l'étape de fusion.

6. Procédé de traitement de fusion pour un matériau contenant du phosphore selon l'une quelconque des revendications 1 à 4, dans lequel une étape d'ajustement de la basicité consistant à ajouter un ajusteur de basicité au matériau contenant du phosphore pour ajuster une basicité du matériau contenant du phosphore devant être comprise dans une plage de 0,7 ± 0,1 est exécutée avant l'étape de fusion.

7. Procédé de traitement de fusion pour un matériau contenant du phosphore selon la revendication 6, dans lequel l'étape d'ajout de composé de fer comprend une étape d'ajustement du rapport fer-phosphore-silicium consistant à ajouter le composé de fer pour obtenir un rapport fer (Fe) phosphore (P) silicium (Si) (=Fe/(P+Si) [mol/mol]) dans une plage de 0,2 à 0,8, l'étape d'ajustement du rapport fer-phosphore-silicium étant exécutée avant l'étape de fusion.

**8.** Procédé de traitement de fusion d'un matériau contenant du phosphore selon l'une quelconque des revendications 5 à 7, dans lequel l'étape d'ajout de composé de fer et l'étape d'ajustement de la basicité sont exécutées avant l'étape de fusion pour obtenir un indice de fluidité à l'état fondu de 60 % ou plus.

**9.** Procédé pour faire fonctionner un four de fusion qui fait fondre une matière contenant du phosphore avec une quantité de phosphore en termes de solide sec de 0,04 % en poids ou plus, la matière contenant du phosphore contenant de l'eau dont la quantité a été ajustée, le procédé comprenant:

l'ajout préalable d'un composé de fer trivalent au matériau contenant du phosphore pour obtenir une quantité de fer (Fe) en tenues de solide sec comprise entre 1 et 8 % en poids;
l'agitation de la matière contenant du phosphore;
l'introduction du matériau contenant du phosphore dans le four de fusion; et
la fusion du matériau contenant du phosphore avec l'atmosphère réductrice obtenue autour du composant de fer trivalent par le gaz de pyrolyse généré lors de la pyrolyse de la matière organique incluse dans le matériau contenant du phosphore, et le matériau contenant du phosphore en fusion dans l'état où le composé de fer trivalent est réduit en un composé de fer divalent.

Concentrated
sludge

⇐ Polyferric sulfate

Dewatering
machine 1

Storage pit 2

⇐ Slaked lime/ Ferric oxide

Drying
machine 3

Hopper 4

| Melting furnace 5 | → | Waste heat boiler 6 | → | Dry electric dust collector | → | Flue-gas treatment tower 8 |

⇓ Slag     ⇓ Dust     ⇓ Dust

Wet electric dust collector 9 → Exhaust gas

Dust ⇓ Discharge water

Fig.1

(a)

(b)

Fig.2

(a)

(b)

Fig.3

Fig.4

(a)

(b)

Fig.5

$l_0$ (Sample length = 70mm

Magnetic board

(a)

$l_0$ (Sample length = 70mm

Magnetic board

5°

(b)

$l$

$l_0$

Magnetic board

(c)

Fig.6

Fig.7

Concentrated
sludge

⇐ Polyferric sulfate

Dewatering
machine 1

↓

Storage pit 2

↓ ⇐ Slaked lime

Drying
machine 3

↓

Hopper 4

↓ ⇐ Iron powder

| Melting furnace 5 | → | Waste heat boiler 6 | → | Dry electric dust collector | → | Flue-gas treatment tower 8 |

⇓ Slag       ⇓ Dust       ⇓ Dust

Wet electric dust collector 9 → Exhaust gas

Dust       ⇓

Discharge water

Fig.8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006015173 A
- JP 2001009500 A
- JP 2000140895 A